# EUROPEAN PATENT APPLICATION

(11) **EP 2 886 581 A1**
(43) Date of publication of application: **24.06.2015**
(21) Application number: 13198697.8
(22) Date of filing: 20.12.2013
(51) Int. Cl.: C08G 69/34, C08G 69/42, C08G 77/455, C09J 7/02, C09D 177/08, B32B 27/34, C09D 183/10

(54) **Polyamide and its use in a release lacquer**

(71) Applicant: Siegwerk Druckfarben AG & Co. KGaA, 53721 Siegburg (DE)
(72) Inventor: Boccon, Nadège, 74910 Usinens (FR); Tonnoir, Olivier, 74960 Meythet (FR); Brettar, Julie, 51107 Köln (DE)
(74) Representative: Hepp Wenger Ryffel AG

(57) **Abstract**

The present invention is related to a polyamide resin, comprising a main structural unit derived from at least one dimeric C10-30 carboxylic acid and at least one polyamine, preferably selected from the group consisting of diamines and triamines, and at least one polyorganosiloxane moiety covalently linked to said at least one main structural unit. The present invention is furthermore related to a process for preparing said polyamide resin, to a release lacquer comprising said polyamide resin, and to a film, comprising said release lacquer on its one surface and a layer of a pressure-sensitive adhesive on its other surface.

## Description

The present invention is related to novel polyamides and their use in release lacquers.

Many articles such as food articles are stored in flexible packagings, i.e. packagings which are made of a material which shows some flexibility and can thus undergo certain modifications of its shape.

Flexible packagings are usually prepared by applying a printed layer, preferably by flexographic or gravure printing, onto one side of the packaging substrate, in order to provide the packaging with information, design or pictures. The packaging is then manufactured by a sealing step. For sealing, it is usually necessary that the substrate comprises, on the side opposite to the side onto which the printed layer is applied, a sealing layer.

In the art, both hot-sealing and cold-sealing processes are known. In a hot-sealing process, the sealing layer is made of a varnish that under heating and application of pressure will melt and cause sealing. In a cold-sealing process, the sealing layer comprises a pressure-sensitive adhesive which under application of pressure causes sealing.

For many food packaging applications, cold-seal layers are preferred, since the articles to be incorporated into the packaging are temperature-sensitive and do not withstand the conditions of hot sealing. Examples of temperature-sensitive articles are chocolate or candy. Also, during hot-sealing the sealing layer is molten, which may release undesired odorous components.

The printed packaging films are usually stored on rolls before they are further processed into final packagings. Under those storing conditions, it is inevitable that the surface of the film carrying the printed layer comes into contact with the other surface of the film comprising the pressure-sensitive adhesive layer. Since long films (of. e.g. several hundreds of meters) are stored on rolls, a considerable pressure is exerted onto at least a part of the stored film, which may be sufficient for initiating undesired cold-sealing during storage.

In order to prevent such cold-sealing during storage, the film surface opposite to the side to which the pressure-sensitive adhesive layer has been applied is provided with a release lacquer layer. In case said other film surface is provided with a printed layer, as described above, the release lacquer is an overprint varnish which is applied on top of said printed layer.

The release lacquer layer does not react with the pressure-sensitive adhesive layer under the conditions of storage. When the film is stored on a roll, the pressure-sensitive adhesive layer comes into contact with the release lacquer layer, and no cold-sealing takes place.

Release lacquer layers are known in the art. A conventional type of release lacquer layers comprises as a main ingredient a polyamide which is made from a dimeric fatty acid as carboxyl component and a polyamine, preferably a diamine, as amine component. The paraffinic character provided by the fatty acid component plays a significant role for the release effect of the layer.

In recent years, however, there has been an increasing problem with such polyamides as most of them are only soluble in hydrocarbon solvents, in particular mixtures of C6 to C8 hydrocarbons. For environmental and health reasons, those solvents should be avoided in release lacquer layers for flexible packaging applications.

Moreover, for good processability of the film, the release lacquer layer has to possess good slipping properties and good anti-blocking properties. In order to provide a conventional release lacquer with those required properties, additives such as waxes, fatty acid amide waxes, paraffin or silicone-based additives are included into the composition from which the lacquer layer is prepared. However, some of those additives lead to inconsistent slip properties. In addition, there is a serious risk that those additives may migrate out of the release lacquer layer, because of their low molecular weight. As a consequence, additives like silicone-based additives may migrate into and compromise or even destroy (poison) the pressure-sensitive adhesive layer, or they may contaminate the packed product.

It has been the problem underlying the present invention to provide a release lacquer layer which overcomes some or all of the above-mentioned problems.

According to the present invention, the above problem has been solved by a release lacquer layer comprising a novel polyamide resin. Said polyamide resin is characterized by a silicone moiety grafted to a main structural unit.

Thus, according to a first aspect, the present invention is related to a polyamide resin, comprising a main structural unit derived from at least one dimeric C10-30 carboxylic acid and at least one polyamine, preferably selected from the group consisting of diamines and triamines, and at least one polyorganosiloxane moiety covalently linked to said at least one main structural unit.

Polyamides and their synthesis are well-known in the art. A polyamide is generally formed by reacting a polycarboxylic acid component, preferably a dicarboxylic component, with a polyamine component, preferably a diamine component, optionally in the presence of a suitable catalyst. The carboxylic groups and the amine groups react with each other under formation of amide groups, resulting in a polymer having the following main structural unit:

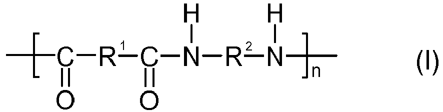

In said formula, R¹ is the optionally substituted carbon chain of the polycarboxylic acid moiety, and R² is the optionally substituted carbon chain of the polyamine moiety.

The polyamides of the present invention are derived from at least one dimeric C10-30 carboxylic acid. Long-chain carboxylic acids are conventionally called fatty acids. As described above, the long carbon chains of the carboxylic acid moieties provide the polyamides of the present invention with the paraffinic character necessary for exhibiting a release effect.

According to the present invention, it is preferred to use dimeric C12-20 carboxylic acids, even more preferably dimeric C14-18 carboxylic acids, especially preferred being dimers of tall oil (a mixture of C16 and C18 carboxylic acids), palmitic acid (C16), oleic acid (C18), linoleic acid (C18), and mixtures thereof.

According to the present invention, the term "dimeric C10-30 carboxylic acid" is to be understood that the compound is a dimer of two C10-30 carboxylic acids, and is thus a dicarboxylic acid. The designations of the dimeric carboxylic acids with other chain lengths are to be understood in the same way.

Dimeric carboxylic acids can be obtained by dimerisation of unsaturated carboxylic acids or carboxylic acid derivatives such as esters. The synthesis is described, for example in US-6,011,131 A, the respective content of which is incorporated by reference herein. Generally, unsaturated fatty acids are reacted with each other in the presence of a clay catalyst such as montmorillonite clay at elevated temperature, typically 200 to 300°C, preferably 220°C to 285°C, for about 1 to 10 h. The dimerisation reaction may be carried out under elevated pressure, for example in an autoclave. The obtained dimeric fatty acid may be bleached with a mineral acid such as phosphoric acid. The thus obtained dimeric carboxylic acid may comprise portions of trimeric carboxylic acids, as well as residual monomers. If desired, purification of the dimeric carboxylic acids may be carried out by e.g. distillation. If desired, the dimeric carboxylic acids may be hydrogenated to convert unsaturated products into saturated products.

Dimeric carboxylic acids may have an acylic or a cyclic structure.

Dimeric carboxylic acids, in particular dimeric fatty acids, are commercially available. Reference is made, for example to the commercial products Empol^{®} from BASF, Pripol™ from Croda or Unidyme^{®} from Arizona Chemical. Specific example suitable for the present invention are Pripol 1009 (Dimer acid, hydrogenated), Pripol 1012 (Dimer acid) and Pripol 1017 (Dimer acid) from Croda.

In order to obtain polyamides, the above described dimeric carboxylic acids are reacted with polyamines, preferably diamines. Examples of suitable diamines are ethylene diamine, hexamethylene diamine, tetramethylene diamine, piperazine, piperidine, isophorone diamine, propane diamine, phenylenediamine, and mixtures thereof. Also, triamines such as diethylene triamine or bis(hexamethylene)triamine may be used according to the present invention.

The starting materials react with each other in a polycondensation reaction under formation of amide groups. The reaction is well-known and need not be described in detail here. Generally, all reactants are mixed together at room temperature (25°C) or elevated temperature. Subsequently, the temperature is raised to 150 to 350°C, and the reaction is carried out under these conditions for several hours. Preferably, the reaction is carried out in an inert gas atmosphere, preferably under nitrogen. After termination of the reaction, preferably vacuum is applied to purify the product (remove all short molecules from the product that could give rise to unpleasant odour).

According to the present invention, the term vacuum is to be understood to refer to conditions of significantly reduced pressure, as compared to normal conditions of 1013 hPa. In particular, the term vacuum refers to conditions of reduced pressure of 100 Pa or less. Vacuum can be generated by conventional means such as a pump.

The reaction can be carried out in the presence of a catalyst such as phosphoric acid.

Also, additives such as anti-foam agents (e.g. Dow Corning 200) and anti-oxidants (e.g. Irganox 1010) may be added to the reaction mixture. Typically, those additives are used in amounts of 0 to 5 wt.-%, preferably 0.1 to 3 wt.-%.

According to the present invention, it is preferred that the starting monomers (dimeric carboxylic acids and polyamines) are used in a ratio of 5:1 to 1:5, more preferably 2:1 to 1:2. Depending on the selected ratio, the resulting polyamide will have free terminal carboxyl groups or free terminal amino groups, which may be used for the grafting reaction with a polyorganosiloxane, as described below.

Mono fatty acids such as oleic acid or stearic acid may be added to the reaction mixture in order to adjust the ratio between different fatty acid moieties and to act as chain terminating agents. Those mono fatty acids are used in amounts of 0 to 5 wt.-%, preferably 0.1 to 3 wt.-%.

Furthermore, other reactants for control of the molecular weight of the resulting polyamide or modifying some of its properties (e.g. hardness, flexibility) may be added to the reaction mixture. Reference is made, for example, to short-chain carboxylic acids such as acetic acid, n-butyric acid, isobutyric acid, isophthalic acid, propionic acid, ethyl-hexanoic acid, lactic acid, azelaic acid, sebacic acid, pimelic acid, and itaconic acid. Also monoamines such as monoethanolamine may be used for that purpose. Those reactants are used in amounts of 0 to 10 wt.-%, preferably 0.1 to 6 wt.-%.

The polyamides of the present invention are characterized by the incorporation of polyorganosiloxane moieties which are covalently linked to the main structural unit of the polymer. Polyorganosiloxanes are also frequently designated as silicones.

According to the present invention, the term "main structural unit" refers to the polymer backbone derived from the above described reaction of dimeric carboxylic acids and polyamines.

As described above, depending on whether an excess of dimeric carboxylic acid or an excess of polyamine is used, the main structural unit of the polymer comprises either terminal free carboxylic groups (in the case of excess of dimeric carboxylic acid) or terminal free amino groups (in the case of excess of polyamine), or both kinds of terminal groups.

According to the present invention, the polyorganosiloxane moieties are covalently attached to the main structural unit of the polymer by a reaction with free terminal groups. This can be achieved by using as a polyorganosiloxane monomer a modified polyorganosiloxane, i.e. a polyorganosiloxane having at least one functional group which is capable of reacting with carboxyl or amino groups. According to a preferred embodiment, said functional group of said polyorganosiloxane is selected from the group consisting of carboxyl groups or amino groups.

According to the present invention, preferred modified polyorganosiloxanes suitable as monomers have the following structure: 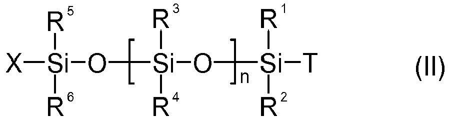 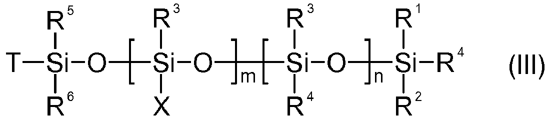 wherein
- R¹, R², R³, R⁴, R⁵ and R⁶: are the same or different and designate optionally substituted C₁₋₄ alkyl groups, preferably optionally substituted methyl or ethyl groups;
- X: is a functional group selected from the group consisting of -COOH and -(CR⁷R⁸)ₚNH₂,
wherein R⁷ and R⁸ are the same or different and designate optionally substituted C₁₋₄ alkyl groups, preferably optionally substituted methyl or ethyl groups;
and
p is an integer from 0 to 4, preferably 0, 1 or 2;
- T: is identical with X or is R⁹, wherein R⁹ designates an optionally substituted C₁₋₄ alkyl group, preferably an optionally substituted methyl or ethyl group;
- m: is a number in the range of 1 to 10, preferably 1 to 3, most preferably 1; and
- n: is a number in the range of 1 to 100, preferably 1 to 20, most preferably 1 to 5.

Modified polyorganosiloxanes such as the ones described above are commercially available from Shin-Etsu, Evonik or Gelest. Examples of commercial products suitable for the present invention are X-22-3710 (modified polyorganosiloxane with one terminal carboxyl group), X-22-162C (modified polyorganosiloxane with two terminal carboxyl groups), X-22-161A (modified polyorganosiloxane with two terminal amino groups) and PAM-E (modified polyorganosiloxane with two terminal amino groups).

The modified polyorganosiloxanes used as monomers for making the polyamides of the present invention may either have one or two terminal functional groups. If the modified polyorganosiloxane only has one terminal functional group, the at least one polyorganosiloxane moiety is linked to the end of one main structural unit, which may lead to the following exemplary structures:

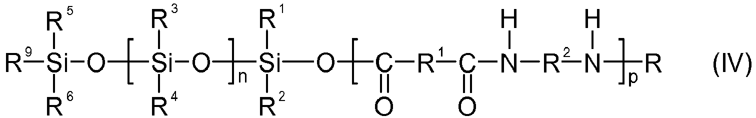

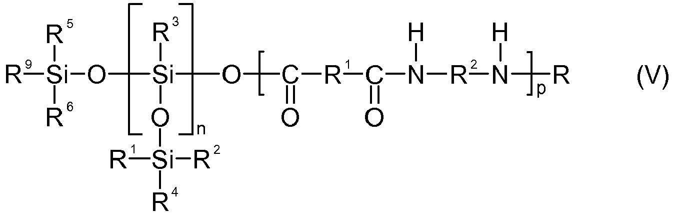

If the modified polyorganosiloxane has two terminal functional groups, said polyorganosiloxane moiety is linked to the ends of two main structural units and connects the two main structural units with each other, which may lead to the following exemplary structure:

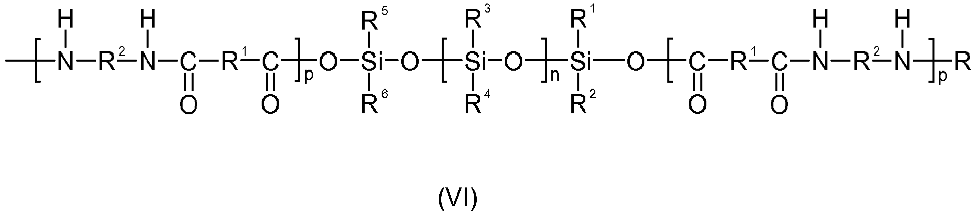

In the above structures, the residues have the same meaning as in formulas (I) to (III) above. P may be a number in the range of 1 100, preferably 5 to 50, most preferably 10 to 30. R may be H or an optionally substituted C₁₋₄ alkyl residue, preferably methyl or ethyl.

According to the present invention, the modified polyorganosiloxanes used as monomers for making the polyamides of the present invention should preferably exhibit a viscosity between 0 and 250 mPa·s at 25°C, more preferably between 10 and 100 mPa·s at 25°C, as measured with a Brookfield DV-II+ Pro, with a TL6 spindle. With polyorganosiloxanes exhibiting a higher viscosity, in some cases there may be problem of compatibility with the other monomers (dimeric carboxylic acids and polyamines).

According to the present invention, it is preferred that the at least one modified polyorganosiloxane be used in an amount of 0.5 to 10 wt.-%, preferably 1 to 5 wt.& and more preferably 1.1 to 3 wt.-%, with respect to the total amount of dimeric carboxylic acid and polyamine components.

According to the present invention, it is possible that mixtures of dimeric carboxylic acid components, mixtures of polyamine components and mixtures of modified polyorganosiloxane components may be reacted with each other. However, it is preferred that one specific dimeric carboxylic acid and one specific modified polyorganosiloxane are reacted with one specific polyamine or a mixture of two polyamines, wherein the polyamine or the polyamines are preferably diamines.

The polyamides according to the present invention can be manufactured by a process for preparing the above described polyamide resin, comprising the steps
a) adding together carboxyl-group containing starting materials,
b) adding amino-group containing starting materials to the reaction mixture of step a),
c) heating the obtained reaction mixture until the reaction is completed.

In other words, according to the present invention the dimeric carboxylic acid component or the mixture of dimeric carboxylic acid components is provided in a suitable device, for example a reaction flask. If a modified polyorganosiloxane having at least one terminal carboxyl group it used, it is now added to the reaction flask. Optional acidic terminating agents such as mono fatty acids or short-chain carboxylic acids are also added into the reaction flask. Also, optional additives and catalysts are added at this stage.

The resulting mixture of carboxyl-group containing components is provided by stirring and optionally slightly heating. Preferably, the entire process is carried out in inert gas atmosphere, for example under nitrogen.

The reaction mixture of carboxyl-group containing components is preferably brought to a temperature of 20 to 50°C, and then the amino-group containing components are added, preferably drop wise via a dropping funnel. The amino-group containing components are the above described polyamines and optionally monoamines as chain terminating agents. If a modified polyorganosiloxane having at least one terminal amino group it used, it is now also added to the reaction mixture along with the polyamines and the optional amine chain terminating agent.

The described starting materials react exothermically under formation of a salt. In order to complete the polycondensation reaction in a melted salt phase, the reaction mixture is additionally heated to a temperature in the range of 150 to 350°C, preferably 200 to 280°C. Under these conditions, the reaction is carried out for preferably 1 to 8 h.

The reaction mixture is then allowed to cool, and preferably vacuum is applied. The polyamide of the present invention is then obtained as a solid product.

The polyamides of the present invention exhibit good to acceptable solubility in organic solvents such as n-propanol, iso-propanol or ethanol. They can thus be used in release lacquers comprising such solvents.

According to the present invention, it has been found that improved release lacquer layers can be obtained on the basis of the above described polyamides of the present invention. Thus, according to a further aspect, the present invention is related to a release lacquer, comprising a polyamide resin as described above.

Release lacquers are known in the art. Reference is made, for example, to EP-0 703 286 A2.

The release lacquer of the present invention comprises as main component at least one, preferably one silicone-grafted polyamide resin as described above. Said polyamide resin is present in an amount of 10 to 80 wt.-%, preferably 10 to 50 wt.-%, and more preferably 10 to 30 wt.-% of the total amount of the release lacquer.

The release lacquers of the present invention mainly differ from conventional release lacquers in that the conventionally used polyamide resins are partly or fully, preferably fully, replaced by the silicone-grafted polyamide resins of the present invention. According to the present invention, it is possible that the release lacquer comprises, in addition to at least one silicone-grafted polyamide resin of the present invention, at least one conventional polyamide resin which is derived from the above described dimeric fatty acids and polyamines. Such resins could be from the Casamid family from Thomas Swan, such as Casmid 879, from the Flexrez family from Momentive, from the Unirez family from Arizona, such as Unirez 2210, from the Eurelon family from Huntsman, or from the Versamid family from BASF. Preferably, said conventional polyamide is soluble in alcohols such as n-propanol, iso-propanol, or ethanol. Preferably, said conventional polyamide is soluble in alcohols such as n-propanol, iso-propanol, or ethanol. Preferably, the ratio between silicone-grafted polyamide resin and conventional polyamide resin in the release lacquer is in the range from 100:0 to 50:50.

In addition, the release lacquer of the present invention comprises a solvent or a mixture of solvents in an amount of 80 to 10 wt.-%, preferably 75 to 20 wt.-%, and more preferably 75 to 50 wt.-% of the total amount of the release lacquer. Examples of solvents to be used in the release lacquer of the present invention are n-propanol, iso-propanol, ethanol, cyclohexane, or Hydrocarbon solvents (such as ADO Hydrofiner naphta, C6 feed, Desulphurised Tops, Essence LBF, Exxsol DSP 80/110, GO Hydrofiner naphta, Hexane, HF-LVN, Hydrosol Essence 80/110, Hydrotreated naphta, LBF, Light Distillate Feedstock, Light Virgin Naphta, LVN, Naphta, Petroleum ether, Shellsol 80/110), or esters such as methyl acetate, ethyl acetate, and propyl acetate.

The release lacquer of the present invention may further comprise additives such as a wax, for example selected from the group consisting of Fischer-Tropsch waxes, paraffin waxes, polyethylene waxes and PTFE waxes, other compounds like maleic or fumaric modified rosin esters or C14-C18 modified vegetable oils, and stabilizers such as BHT (butyl hydroxy toluene). If present, each of those additives is incorporated in an amount of 0.01 to 10 wt.-%, preferably 0.1 to 5 wt.-%, of the total amount of the release lacquer.

As described herein, all percent values of components of a composition are understood to sum up to 100%.

The release lacquer of the present invention can be prepared by mixing the above described components together under standard conditions. Thus, the present invention is also related to a process for preparing a release lacquer as described above, comprising the step of adding together at least one polyamide resin as described above with other components of the release lacquer.

The release lacquer of the present invention is particularly suitable for cold-seal applications. It has been found that the release lacquer of the present invention exhibits a profile of properties which makes it especially suitable for those applications. The release lacquer of the present invention may be favourably formulated as an alcohol-based system. Moreover, it exhibits a low odour, in particular when during preparation the polyamide is subjected to a vacuum step in order to remove remaining volatile materials. It exhibits good anti-blocking properties, which in comparison to conventional release lacquers are similar or even better. Also, release lacquer of the present invention exhibits good slipping properties, which are even better than those of conventional release lacquers which contain a slipping agent such as a silicone additive. Finally, the release lacquer of the present invention does not lead to any poisoning and thus destruction of adjacent pressure-sensitive adhesive layers, since the silicone moieties are covalently linked to the main structural unit and cannot migrate out of the release lacquer layer. It was surprising that the release lacquer of the present invention could exhibit all of the above properties in combination.

Thus, the present invention is furthermore related to the use of a polyamide resin as described above for preparing a release lacquer.

The release lacquer layer of the present invention may be either directly applied onto a substrate, or alternatively it may be applied as an overprint varnish onto a printed ink layer on a substrate.

The substrate may be selected from a wide range of substrates commonly provided with ink or varnish layers. According to the present invention, the substrate may be preferably selected from polymer substrates such as polyethylene or polypropylene or polyethylene terephthalate polymers, or paper.

In case a printed substrate is used, the ink layer applied onto the substrate may be made from any ink conventionally used in flexible packaging applications. Such an ink can be applied on the substrate by any standard technique, preferably by flexographic or gravure printing.

The release lacquer of the present invention can be applied onto the substrate or the printed ink layer on the substrate by any conventional coating technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

The release lacquer of the present invention is applied in amounts sufficient for achieving the desired release effect. Preferably, the release lacquer is deposited in a layer thickness in the range of 1.4 to 1.6 g/m². It is important, in particular if the release lacquer of the present invention is applied as overprint varnish onto an ink layer, that the applied release lacquer layer covers essentially the entire respective side (i.e. more than 95%, preferably more than 99%) of the substrate.

For flexible packaging applications, the substrate (herein also referred to a film) is provided on the side opposite to the side to which the release lacquer is applied, with a layer of a pressure-sensitive adhesive, in order to enable cold-sealing of the film. Thus, the present invention is also related a film, comprising a release lacquer as described above on its one surface and a layer of a pressure-sensitive adhesive on its other surface.

Pressure-sensitive adhesives are known in the art. They enable the formation of a permanent bind by the sole application of a certain degree of pressure. No heating is usually required for forming a permanent bond with a pressure-sensitive adhesive. Pressure-sensitive adhesives are typically based on a formulation comprising an elastomer and optionally a tackifier. The elastomer may be selected from the group consisting of natural rubbers, synthetic rubbers (such as butyl rubbers or silicone rubbers), acrylic polymers, styrene block copolymers such as SBS (styrene-butadiene-styrene), SEBS (styrene-ethylenebutylene-styrene), SIS (Styrene-isoprene-styrene), vinylethers, nitriles, and mixtures thereof. Suitable tackifiers are, for example, rosin esters, terpenes or silicate resins.

The pressure-sensitive adhesive layer is typically applied as a solution or dispersion, preferably a water-based dispersion, onto the substrate by conventional techniques, preferably by flexographic or gravure printing.

The thus formed film is stored on a roll, wherein one roll may typically carry several hundreds of meters of the above described film. As mentioned above, during storage on a roll it is inevitable that the side of the substrate carrying the layer of pressure-sensitive adhesive (also referred to as back-side of the film) comes into close contact with the other side of the film carrying the release-lacquer layer of the present invention (also referred to as front-side of the film). With the release lacquer layer of the present invention, any undesired cold-sealing is prevented under those conditions. Also, no poisoning of the pressure-sensitive adhesive layer occurs, so that the pressure-sensitive adhesive layer remains fully operable.

From the above described film, a flexible packaging may be manufactured by cold-sealing of two films, or two portions of one film, with each other. Cold-sealing is known in the art and is typically performed by bringing the films to be connected with each other into close contact and applying pressure. For example, two of the above films may be supplied into the gap between two rolls or a rotary press, and squeezed together to form the desired cold-seal. Subsequently, the thus obtained sealed product may be cut to a desired size and form.

Thus, the present invention is furthermore related to an article, preferably flexible packaging, obtainable by cold-sealing at least one film, preferably two films, as described above.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g., soap packaging, hair care packaging, baby care packaging, feminine care packaging, male care packaging), home care packaging (e.g., detergent packaging, cleaner packaging), agricultural packaging (e.g., herbicide packaging, pest control packaging, fertilizer bags), industrial packaging (e.g., shopping bags, construction wrappers and bags), and pet care packaging (e.g., pet food bags, pet medical packaging, pet hygiene packaging).

### Examples

The present invention will now be described in more detail with reference to non-limiting examples. Unless specified otherwise, all amounts are given as weight percent.

### Starting materials

The following materials were used in the examples:
a) Dimeric carboxylic acids from Croda:

| Trade Name | Description | Acid Value (mg KOH/g) | Saponification value (mg KOH/g) | Dynamic Viscosity (25°C mPa·s) |
|---|---|---|---|---|
| Pripol 1009 | Dimer acid hydrogenated | 194-198 | 196-200 | 7500 |
| Pripol 1012 | Dimer acid | 194-198 | 198-202 | - |
| Pripol 1017 | Dimer acid | 190-197 | 195-202 | 7700-8700 |

b) Polyamines:
- Ethylene Diamine (EDA), supplied by Huntsman.
- Hexamethylene Diamine (HMDA), supplied by Invista as commercial product Dytek HMD 50-80% (solution of HMDA in water at 80%).
c) Modified polyorganosiloxanes from Shin-Etsu:

| Product Name | Modification type | Organic group | Viscosity (25°C/mPa·s) | Specific Gravity (25°C) | Functional group equivalent weight (FGEW g/mol) |
|---|---|---|---|---|---|
| KF-864 | Amino Side Chain Type | -RNH₂ | 1670 | 0.98 | 3800 |
| X-22-3710 | Carboxyl Single End Type | -RCOOH | 58 | 0.97 | 1450 |
| X-22-162C | Carboxyl Dual End Type | -RCOOH | 216 | 0.98 | 2300 |
| X-22-161A | Amino Dual End Type | -RNH₂ | 24 | 0.97 | 800 |
| PAM-E | Amino Dual End Type | -RNH₂ | 3 | 0.90 | 130 |

d) Mono carboxylic acids
- Isophthalic Acid supplied by Flint Hills Resources.
- Isobutyric Acid supplied by Oxea.
- Acetic Acid supplied by Sigma-Aldrich.
- Radiacid 0968 (Monomer fatty acid) supplied by Oleon, with an acid value between 180 and 190 mg KOH/g and a colour (Gardner) in between 0 and 3.

### Evaluation of physical properties

The properties of the products were evaluated according to the following protocols:

### a) GPC measurement:

GPC (gel permeation chromatography) was performed with a Waters integrated system with the following equipments:
- Pump 515, with a constant flow of 1mL/min
- Automatic injection with the 717 Plus auto-sampler
- Refractive index detector 2414

The eluting solvent was Tetrahydrofuran (THF) purchased from Sigma-Aldrich in a chromatography grade and without any stabilizer. Products to be analyzed were diluted in THF too. Two columns in line were used; both were PLgel from Agilent with the following specifications:
- First column: 100 Å, 5 µm for a range of products from 0 - 4000Da.
- Second column: Mixed bed D, 5 µm for a range of products from 4 to 400kDa.

Calibration was made with polystyrene standards, and toluene as an internal standard was added into each analyzed sample. Data were processed by Empower 2 soft-ware.

### b) Acid value measurement:

In a solution of the respective polyamide resin in isopropanol, acid value was measured by titration with an ethanolic solution of KOH (0.01 N). Equivalent volume was observed with persistent phenolphthalein colour change (from uncoloured to pink).

### c) Amine value measurement:

In a solution of the respective polyamide resin in isopropanol, amine value was measured by titration with an ethanolic solution of HCl (0.01 N). Equivalent volume was observed with bromophenol blue colour change (from blue to yellow).

### Preparation of polyamide resins

### Comparative example 1: Preparation of a conventional polyamide resin (non-silicone grafted)

280g (81.51%) of Pripol 1012 and 6.55g (1.91%) of acetic acid were introduced in a glass reactor which was slightly warmed with a reactor warmer. Under stirring (120 rpm), and under nitrogen atmosphere, as soon as the temperature reached 67°C, 40.3g (11.73%) of Dytek HMD and 16.67g (4.85%) of EDA were quickly introduced via a dropping funnel. An exothermic reaction was observed, and temperature increased quickly up to 107°C within 4 minutes. Warming was then increased in order to reach 270°C in one hour. The temperature was stabilised and maintained at this point for half an hour. Vacuum was then applied to the reactor for one and a half hour, after which the resin was collected. The obtained product was amber, hard and slightly tacky. The resin was analyzed by GPC giving the following properties:

| | Mn (Da) | MP (Da) | Mw (Da) | Mz (Da) | Polydispersity |
|---|---|---|---|---|---|
| Comparative example 1 | 4020 | 12929 | 11194 | 18018 | 2.78 |

Acid value: 4 mg KOH/g
Amine value: 4 mg KOH/g.

### Example 1: Preparation of a polyamide resin of the present invention (silicone-grafted)

264.99g (87.68%) of Pripol 1009 and 5.01g (1.66%) of X-22-3710 acid modified silicone fluid were introduced in a glass reactor which was slightly warmed with a reactor warmer. Under stirring (120 rpm), and under nitrogen atmosphere, as soon as the temperature reached 40°C, 10.97g (3.63%) of Dytek HMD and 21.23g (7.03%) of EDA were introduced via a dropping funnel. An exothermic reaction was observed, and temperature increased quickly up to 73°C within 1 minute. Warming was then increased in order to reach 200°C in 40 minutes. The temperature was stabilised and maintained at this point for 3 hours. Vacuum was then applied to the reactor for one hour, after which the resin was collected. The obtained product was homogeneous, amber, quite opaque and slightly flexible. The resin was analyzed by GPC giving the following properties:

| | Mn (Da) | MP (Da) | Mw (Da) | Mz (Da) | Polydispersity |
|---|---|---|---|---|---|
| Example 1 | 5402 | 14080 | 13522 | 20840 | 2.5 |

Acid value: 15 mg KOH/g
Amine value: 1 mg KOH/g.

### Example 2: Preparation of a polyamide resin of the present invention (silicone-grafted)

435g (82.04%) of Pripol 1017, 10g (1.88%) of X-22-162C diacid modified silicone fluid, 7.22g (1.36%) of isophthalic acid, 16.12g (3.03%) of isobutyric acid and 8.87g (1.67%) of Radiacid 0968were introduced in a glass reactor which was slightly warmed with a reactor warmer. Under stirring (120 rpm), and under nitrogen atmosphere, as soon as the temperature reached 50°C, 53.22g (10.02%) of EDA were introduced via a dropping funnel. An exothermic reaction was observed, and temperature increased quickly up to 95°C within 5 minutes. Warming was then increased in order to reach 250°C in 40 minutes. The temperature was stabilised and maintained at this point for 2 hours. Vacuum was then applied to the reactor for 10 minutes, after which the resin was collected. The obtained product was homogeneous, amber, hard and brittle.

### Example 3: Preparation of a polyamide resin of the present invention (silicone-grafted)

448.07g (84.3%) of Pripol 1017, 11.52g (2.17%) of acetic acid and 8.87g (1.67%) of Radiacid 0968were introduced in a glass reactor which was slightly warmed with a reactor warmer. Under stirring (120 rpm), and under nitrogen atmosphere, as soon as the temperature reached 24°C, 52.83g (9.94%) of EDA and 10g (1.88%) of X-22-161A amino-modified silicone fluidwere introduced via a dropping funnel. An exothermic reaction was observed, and temperature increased quickly up to 77°C within 6 minutes. Warming was then increased in order to reach 200°C in 30 minutes. The temperature was stabilised and maintained at this point for 4 hours. Vacuum was then applied to the reactor for 1.5 hours, after which the resin was collected. The obtained product was homogeneous, amber, hard and brittle, and the surface of the resin was slippery.
Acid value: 6 mg KOH/g
Amine value: 4 mg KOH/g.

### Example 4: Preparation of a polyamide resin of the present invention (silicone-grafted)

426.29g (80.08%) of Pripol 1017, 12.27g (2.30%) of acetic acid and 31.19g (5.86%) of Radiacid 0968were introduced in a glass reactor which was slightly warmed with a reactor warmer. Under stirring (120 rpm), and under nitrogen atmosphere, as soon as the temperature reached 23°C, 52.6g (9.88%) of EDA and 10g (1.88%) of PAME-E diamino-modified silicone fluidwere introduced via a dropping funnel. An exothermic reaction was observed, and temperature increased quickly up to 83°C within 7 minutes. Warming was then increased in order to reach 200°C in 50 minutes. The temperature was stabilised and maintained at this point for 6 hours. The resin was then collected. The obtained product was homogeneous, hard and brittle.
Acid value: 13 mg KOH/g
Amine value: 1 mg KOH/g.

### Preparation of release lacquers

The following release lacquer compositions were prepared:

| **Example** | **Composition** |
|---|---|
| C2 | 26 wt.-% Polyamide of comparative example 1 |
| | 63 wt.-% n-propanol |
| | 5 wt.-% Ethanol |
| | 3.5 wt.-% Ethyl acetate |
| | 2 wt.-% Fischer-Tropsch wax |
| | 0.3 wt.-% combination resins (maleic modified rosin ester and C14-C18 modified vegetable oil) |
| | 0.2 wt.-% stabilizers |
| C3 | 25 wt.-% Polyamide of comparative example 1 |
| | 26 wt-% Cyclohexane |
| | 37 wt.-% Ethanol |
| | 6 wt.-% Ethyl acetate |
| | 2 wt.% Fischer-Tropsch wax |
| | 3.9 wt.% combination resins (maleic modified rosin ester and C14-C18 modified vegetable oil) |
| | 0.1 wt.-% stabilizers |
| 5 | 26 wt.-% Polyamide of example 1 |
| | 63 wt.-% n-propanol |
| | 5 wt.-% Ethanol |
| | 3.5 wt.-% Ethyl acetate |
| | 2 wt.-% Fischer-Tropsch wax |
| | 0.3 wt.-% combination resins (maleic modified rosin ester and C14-C18 modified vegetable oil) |
| | 0.2 wt.-% stabilizers |
| 6 | 25 wt.-% Polyamide of example 1 |
| | 26 wt-% Cyclohexane |
| | 37 wt.-% Ethanol |
| | 6 wt.-% Ethyl acetate |
| | 2 wt.% Fischer-Tropsch wax |
| | 3.9 wt.% combination resins (maleic modified rosin ester and C14-C18 modified vegetable oil) |
| | 0.1 wt.-% stabilizers |
| 7 | 26 wt.-% Polyamide of example 2 |
| | 63 wt.-% n-propanol |
| | 5 wt.-% Ethanol |
| | 3.5 wt.-% Ethyl acetate |
| | 2 wt.-% Fischer-Tropsch wax |
| | 0.3 wt.-% combination resins (maleic modified rosin ester and C14-C18 modified vegetable oil) |
| | 0.2 wt.-% stabilizers |
| 8 | 25 wt.-% Polyamide of example 2 |
| | 26 wt-% Cyclohexane |
| | 37 wt.-% Ethanol |
| | 6 wt.-% Ethyl acetate |
| | 2 wt.% Fischer-Tropsch wax |
| | 3.9 wt.% combination resins (maleic modified rosin ester and C14-C18 modified vegetable oil) |
| | 0.1 wt.-% stabilizers |
| 9 | 24 wt.-% Polyamide of example 3 |
| | 4 wt-% Cyclohexane |
| | 33 wt.-% Ethanol |
| | 3 wt.-% Ethyl acetate |
| | 28 wt.-% C6-C8 hydrocarbon solvents |
| | 2.5 wt.% combination resins (maleic modified rosin ester and C14-C18 modified vegetable oil) |
| | 0.4 wt.-% stabilizers |
| | 4.8 wt.-% paraffin wax |
| | 0.3 wt.-% PTFE wax |
| 10 | 12.5 wt-% Polyamide of example 3 |
| | 12.5 wt.-% co-solvent Polyamides (based on dimeric fatty acid, acetic acid and ethylene diamine, Mw= 15400 Da, acid value 4, amine value 3) |
| | 26 wt-% Cyclohexane |
| | 37 wt.-% Ethanol |
| | 6 wt.-% Ethyl acetate |
| | 2 wt.% Fischer-Tropsch wax |
| | 3.9 wt.% combination resins (maleic modified rosin ester and C14-C18 modified vegetable oil) |
| | 0.1 wt.-% stabilizers |
| 11 | 25 wt-% Polyamide of example 3 |
| | 26 wt-% Cyclohexane |
| | 37 wt.-% Ethanol |
| | 6 wt.-% Ethyl acetate |
| | 2 wt.% Fischer-Tropsch wax |
| | 3.9 wt.% combination resins (maleic modified rosin ester and C14-C18 modified vegetable oil) |
| | 0.1 wt.-% stabilizers |
| 12 | 13 wt-% Polyamide of example 3 |
| | 13 wt-% alcohol-soluble polyamides (based on dimeric fatty acid, propanoic acid, and a blend of hexamethylene diamine and ethylene diamine, Mw= 11402 Da, acid value 4, amine value 1) |
| | 63 wt.-% n-propanol |
| | 5 wt.-% Ethanol |
| | 3.5 wt.-% Ethyl acetate |
| | 2 wt.-% Fischer-Tropsch wax |
| | 0.3 wt.-% combination resins (maleic modified rosin ester and C14-C18 modified vegetable oil) |
| | 0.2 wt.-% stabilizers |
| 13 | 26 wt.-% Polyamide of example 3 |
| | 63 wt.-% n-propanol |
| | 5 wt.-% Ethanol |
| | 3.5 wt.-% Ethyl acetate |
| | 2 wt.-% Fischer-Tropsch wax |
| | 0.3 wt.-% combination resins (maleic modified rosin ester and C14-C18 modified vegetable oil) |
| | 0.2 wt.-% stabilizers |
| 14 | 26 wt.-% Polyamide of example 4 |
| | 63 wt.-% isopropanol |
| | 5 wt.-% Ethanol |
| | 3.5 wt.-% Ethyl acetate |
| | 2 wt.-% Fischer-Tropsch wax |
| | 0.3 wt.-% combination resins (maleic modified rosin ester and C14-C18 modified vegetable oil) |
| | 0.2 wt.-% stabilizers |
| 15 | 25 wt-% Polyamide of example 4 |
| | 26 wt-% Cyclohexane |
| | 37 wt.-% Ethanol |
| | 6 wt.-% Ethyl acetate |
| | 2 wt.% Fischer-Tropsch wax |
| | 3.9 wt.% combination resins (maleic modified rosin ester and C14-C18 modified vegetable oil) |
| | 0.1 wt.-% stabilizers |

### Tests with release lacquers

### Odour

Odour was tested in a 250 ml broad-neck bottle. A stopper which was pre-treated in an oven at 40°C for at least 1.5 h was used to close the bottle. At room temperature, the stopper was pressurized using a Hostaphan RN 25 device, wherein for each test the stopper was pushed into the bottle twice. Subsequently, the stopper was tested for its odour, according to the following scale:
0-2: no perceptible odour
3-4: odour could be faintly perceived
5-6: weak odour
7-8: clearly perceptible odour
9-10: strong odour

| Example | t₀ | t₀ + 1 week |
|---|---|---|
| Standard lacquer 1 | 8 | 8 |
| Standard lacquer 2 | 2 | 1 |
| C2 | 4 | 4 |
| C3 | 4 | 4 |
| 5 | 2 | 3 |
| 6 | 4 | 4 |
| 7 | 9 | 8 |
| 8 | 5 | 4 |
| 11 | 3 | 3 |
| 14 | 7 | 8 |
| 15 | 8 | 7 |

### Standard lacquer 1 (Siegwerk RELEASELACK n° 10-603104-0):

*25 wt.-% Blend of commercial co-solvent polyamides (based on dimeric fatty acid, acetic acid and ethylene diamine, Mw= 15400 Da, acid value* 4, *amine value 3)*
*26 wt.-% Cyclohexane*
*37 wt.-% Ethanol*
*6 wt.-% Ethyl acetate*
*0.1 wt.-% stabilizers*
*3.9 wt.-% combination resins (maleic modified rosin ester and C14-C18 modified vegetable oil)*
*2 wt.-% Fischer-Tropsch wax*

### Standard lacquer 2 (Siegwerk RELEASELACK ALKOHOL, n° 10-603381-4):

*26 wt.-% Commercial alcohol-soluble polyamide (based on dimeric fatty acid, propanoic acid, and a blend* of *hexamethylene diamine and ethylene diamine, Mw= 11402 Da, acid value* 4, *amine value 1)*
*63 wt.-% Isopropanol*
*5 wt.-% Ethanol*
*3.5 wt.-% Ethyl acetate*
*0.2 wt.-% stabilizers*
*0.3 wt.-% combination resins (maleic modified rosin ester and C14-C18 modified vegetable oil)*
*2 wt.-% Fischer-Tropsch wax*

All release lacquers of the present invention showed acceptable odour, as compared to standard release lacquers. From a comparison of examples 11 and 15, it can be seen that applying a vacuum to the final reaction product before recovery results in a significantly decreased odour.

### Blocking test

Printed films were stored in contact with the desired product (substrate as described hereinafter) for 24 hours under 10 T of pressure at room temperature (20 or 25°C) and/or 40°C. Printed films were release lacquers printed on an ink layer (VL31-1 Blau from Siegwerk, 12-112852-4) applied onto a substrate, or directly printed on a substrate. The substrate was polypropylene. Blocking tests were done either in contact with nude reverse substrate (un-printed polypropylene), or in contact with a printed cold-seal adhesive on a reverse substrate. The cold-seal adhesive used here was Eukalin 2647 VS. Blocking was then evaluated by measuring a delaminating value on a 2.5cm large sample with an Instron Peel 10N system.

| Conditions: printed on film, stored at 25°C Delamination values in Newton | Example 5 | | Standard lacquer 2 | |
|---|---|---|---|---|
| | Max Value | Med Value | Max Value | Med Value |
| In contact with un-printed polypropylene | 0.02 | 0.01 | 0.02 | 0.00 |
| In contact with cold-seal adhesive | 0.07 | 0.06 | 0.08 | 0.08 |

The release lacquer of example 5 showed comparable blocking resistance as a standard lacquer. Acceptable delamination values are in the range of 0 to 2 N.

In the following table, the results of a qualitative comparison of the release lacquers of the above examples with standard lacquers are given.

### Ref: reference standard

0: similar to standard lacquer
-: slightly worse than standard lacquer, but still acceptable
--: much worse than standard lacquer, not acceptable
+: better than standard lacquer, less blocking

| Example | Printed on ink, contact with cold-seal, stored at 20°C | Printed on ink, contact with cold-seal, stored at 40°C | Printed on film, contact with cold-seal, stored at 20°C | Printed on film, contact with cold-seal, stored at 40°C |
|---|---|---|---|---|
| Standard lacquer 2 | Ref | Ref | Ref | Ref |
| C2 | 0 | -- | | |
| 7 | 0 | + | | |
| 12 | 0 | 0 | 0 | 0 |
| 13 | 0 | 0 | 0 | 0 |

| Standard lacquer 1 | Ref | Ref | | |
|---|---|---|---|---|
| C3 | 0 | + | | |
| 6 | 0 | 0 | | |
| 8 | + | + | | |
| 15 | 0 | - | | |

| Standard lacquer 3 | Ref | Ref | Ref | Ref |
|---|---|---|---|---|
| 9 | 0 | - | 0 | 0 |

### Standard lacquer 3 (Siegwerk RELEASELACK n° 10-605021-4):

*24 wt.-% Blend of two commercial co-solvent polyamides (based on dimeric fatty acid, acetic acid and ethylene diamine, Mw= 15400 Da, acid value 4, amine value 3)*
*32.5 wt.-% Ethanol*
*3 wt.-% Ethyl acetate*
*32 wt.-% C6-C8 hydrocarbon solvents*
*2.5 wt.% combination resins (maleic modified rosin ester and C14-C18 modified vegetable oil)*
*0.4 wt.-% stabilizers*
*4.8 wt.-% paraffin wax*
*0.3 wt.-% PTFE wax*
*0.5 wt.-% silicone additive*

It can be seen that all release lacquers according to the present invention showed satisfactory results and even some improvement over standard lacquers. On the other hand, comparative release lacquer C2 without silicone-grafting failed the blocking test at 40°C.

### Slipping properties

Coefficients of friction were measured with an Instron system using Bluehill software. The test was conducted with the samples described above for the blocking test by contacting lacquer with lacquer with a tear-off velocity of 200 mm/min. A weight of 198.3 g was applied to the samples during testing.

| Printing on ink | Standard lacquer 2 | C2 | Example 5 | Example 7 |
|---|---|---|---|---|
| Ks | 0.58 | 0.74 | 0.62 | 0.57 |
| Kd | 0.25 | 0.28 | 0.23 | 0.15 |

| Printing on ink | Standard lacquer 1 | C3 | Example 5 | Example 7 |
|---|---|---|---|---|
| Ks | 0.51 | 0.95 | 0.41 | 0.35 |
| Kd | 0.26 | 0.38 | 0.25 | 0.20 |
| | | | | |

| Polypropylene | Standard lacquer 3 | | Example 9 | |
|---|---|---|---|---|
| | Printing on film | Printing on Ink | Printing on film | Printing on Ink |
| Ks | 0.33 | 0.36 | 0.21 | 0.34 |
| Kd | 0.20 | 0.22 | 0.14 | 0.16 |

| Polypropylene | Standard lacquer 3 | | Example 9 | |
|---|---|---|---|---|
| | Printing on film | Printing on Ink | Printing on film | Printing on Ink |
| Ks | 0.37 | - | 0.22 | - |
| Kd | 0.22 | - | 0.12 | - |

It can be seen that the release lacquer of the present invention showed improved slipping properties, as compared to the comparative release lacquers without silicone grafting. Also, as compared to standard lacquers an improvement could be observed. In particular, example 9 with the silicone-grafted polyamide showed improved slipping properties, as compared to standard lacquer which contained a conventional silicone-based slipping additive.

### Adhesive poisoning control:

In order to evaluate adhesive poisoning, an enhanced blocking test was performed. Conditions of storage were the same as in the blocking test described above, but the evaluation time under pressure was increased up to 3 months. A cold-sealing trial was performed (reverse adhesive printed substrate versus itself), and it was checked whether the adhesive was still as efficient as without storage. A delaminating value of the cold-sealed sample was thus measured with an Instron Peel 10N system.

| | Standard lacquer 1 | Example 10 | Example 11 |
|---|---|---|---|
| Sealing | 3N | 3N | 3N |

The release lacquers of the present invention did not show any poisoning of the cold-seal adhesive, indicating that no silicone-based slipping agent migrated out of the layer.

### Foaming

The volume of the lacquer was measured with a graduated cylinder before and after stirring. The stirring conditions were the same for the standard lacquer and the examples of the present invention. The test was considered as having been passed when the same result was obtained for the for the standard lacquer and the examples of the present invention.

No foaming was observed when replacing silicone additives in standard lacquer 3 with the formulation based on a silicone-grafted polyamide (Example 9).

## Claims

1. Polyamide resin, comprising a main structural unit derived from at least one dimeric C10-30 carboxylic acid and at least one polyamine, preferably selected from the group consisting of diamines and triamines, and at least one polyorganosiloxane moiety covalently linked to said at least one main structural unit.

2. Polyamide resin according to claim 1, **characterized in that** said at least one polyorganosiloxane moiety is derived from a polyorganosiloxane having at least one functional group which is capable of reacting with carboxyl or amino groups, said functional group being preferably selected from the group consisting of carboxyl groups or amino groups.

3. Polyamide resin according to any one of claims 1 or 2, **characterized in that** the at least one polyorganosiloxane moiety is linked to the end of one main structural unit.

4. Polyamide resin according to any one of claims 1 to 4, **characterized in that** at least one polyorganosiloxane moiety is linked to the ends of two main structural units and connects the two main structural units with each other.

5. Process for preparing a polyamide resin according to any one of claims 1 to 4, comprising the steps
a) adding together carboxyl-group containing starting materials,
b) adding amino-group containing starting materials to the reaction mixture of step a),
c) heating the obtained reaction mixture until the reaction is completed.

6. Process according to claim 5, **characterized in that** the product obtained after step c) is subjected to vacuum.

7. Release lacquer, comprising a polyamide resin according to any one of claims 1 to 4.

8. Release lacquer according to claim 7, **characterized in that** the lacquer comprises one or more additional polyamide resins.

9. Release lacquer according to claim 7 or 8, **characterized in that** the lacquer comprises at least one solvent.

10. Process for preparing a release lacquer according to any one of claims 7 to 9, comprising the step of adding together at least one polyamide resin according to any of claims 1 to 4 with other components of the release lacquer.

11. Film, comprising a release lacquer according to any one of claims 7 to 9 on its one surface and a layer of a pressure-sensitive adhesive on its other surface.

12. Film according to claim 11, **characterized in that** the release lacquer is an overprint varnish applied onto an ink layer.

13. Article, preferably flexible packaging, obtainable by cold-sealing at least one film, preferably two films, according to any of claims 11 or 12.

14. Use of a polyamide resin according to any of claims 1 to 4 for preparing a release lacquer.

15. Use of a release lacquer according to any one of claims 7 to 9 for preparing a film according to claim 11 or 12.
